**Europäisches Patentamt**

**European Patent Office**

**Office européen des brevets**

(11) Veröffentlichungsnummer: **0 154 241**
**B1**

(12) **EUROPÄISCHE PATENTSCHRIFT**

(45) Veröffentlichungstag der Patentschrift:
02.08.89

(51) Int. Cl.⁴: **C 09 D  3/16, C 08 L  1/18**

(21) Anmeldenummer: **85101790.5**

(22) Anmeldetag: **19.02.85**

(54) **Wässrige Dispersionen auf Basis von Cellulosenitraten, Verfahren zu Ihrer Herstellung und ihre Verwendung als schnellhärtende Überzüge.**

(30) Priorität: 03.03.84  DE 3407932
27.11.84  DE 3443068

(43) Veröffentlichungstag der Anmeldung:
11.09.85 Patentblatt 85/37

(45) Bekanntmachung des Hinweises auf die Patenterteilung:
02.08.89 Patentblatt 89/31

(84) Benannte Vertragsstaaten:
DE FR GB IT

(56) Entgegenhaltungen:
EP-A-0 052 764
DE-A-2 436 614
FR-A-1 181 928
GB-A-686 672
US-A-3 615 792

(73) Patentinhaber: **Wolff Walsrode Aktiengesellschaft,**
**Postfach, D-3030 Walsrode 1 (DE)**

(72) Erfinder: **Lühmann, Erhard, Dipl.- Ing.,**
**Kastanienweg 2, D-3036 Bomlitz 1 (DE)**
Erfinder: **Hoppe, Lutz, Dr., Am Badeteich 8, D-3030**
**Walsrode 1 (DE)**
Erfinder: **Szablikowski, Klaus, Dr., Claudiusstrasse**
**3, D-3030 Walsrode 1 (DE)**

(74) Vertreter: **Zobel, Manfred, Dr., c/o BAYER AG**
**Konzernverwaltung RP Patentabteilung**
**Bayerwerk, D-5090 Leverkusen (DE)**

**Beschreibung**

Es ist bekannt, wäßrige Überzugsmittel auf Basis von Cellulosenitraten herzustellen und als Lacke zu verwenden.

So wird in der DOS-2 703 075 und der DOS-2 702 986 ein Verfahren zur Herstellung von Dispersionen auf Basis von Cellulosenitraten beschrieben. Dabei werden die Lackkomponenten in einem Überschuß an organischen Lösungsmitteln gelöst, in Wasser emulgiert und anschließend das organische Lösungsmittel wieder völlig oder teilweise abdestilliert. Um aus diesen Dispersionen klare und hochglänzende Überzüge herstellen zu können, müssen den Dispersionen so viel Koaleszierungsmittel zugesetzt werden, daß damit das Wasser als Azeotrop ausgetrieben werden kann und darüber hinaus genügend Koaleszenzmittel zur Filmbildung der Feststoffteilchen vorhanden bleibt.

Im allgemeinen sind für den fertigen Lack Koaleszierungsmittel mit einer Verdunstungszahl von größer als 33 (nach DIN 53 170) in einer Menge von 12 - 20 Gew.-% bei einem Festkörpergehalt von 25 - 30 Gew.-% notwendig. Diese schwer verdunstenden Lösungsmittel führen dazu, daß eine ausreichende Härtung des Lackes nur mit erhöhter Temperatur und bei verlängerten Trocknungszeiten erreicht werden können.

Ein weiterer Nachteil ist die nicht immer ausreichende Chemikalienbeständigkeit des Lackfilmes.

In Weiterentwicklung dieses Stands der Technik werden in der DE-A-3 100 576 wäßrige Cellulosenitrat-Dispersionen beschrieben, die durch Mitverwendung von wasserunlöslichen Aminoplastharzen auch noch nach Säurezugabe eine Lagerstabilität von 24 h besitzen und mit einem relativ geringen Gehalt an Koaleszenzmittel zu trübungsfreien Filmen führen. Wegen der Verdunstungszahlen dieser Koaleszenzmittel von <33 ist auch hier die Lackhärtung verzögert.

Aus der DE-A-2 436 614 ist ein Verfahren zum Herstellen von Überzügen bekannt. Jedoch verbleibt hierbei Wasser bei der Härtung im Überzug unter Bildung eines undurchsichtigen Überzuges.

Es besteht daher ein Bedarf an wäßrigen Cellulosenitratdispersionen, die zu schnell aushärtenden, hochglänzenden und Chemikalien beständigen Überzügen verarbeitet werden können, ohne daß dieser Dispersion vor ihrer Verarbeitung schwer flüchtige Koaleszenzmittel zugesetzt werden müssen. Vorzugsweise sollten die Überzüge auch vergilbungsbeständig sein, um auch auf hellen Untergründen problemlos eingesetzt werden zu können.

Erfindungsgemäß wird dies durch Bereitstellung von wäßrigen Dispersionen aus

A. 3 - 30 vorzugsweise 5 - 25 Gew.-% Cellulosenitrat,

B. 10 - 50, vorzugsweise 15 - 45 Gew.-% wenigstens eines flüssigen, gegebenenfalls in Wasser auch ohne Emulgator emulgierbaren Prepolymeren mit einem Gehalt von 0,01 - 1,3 Mol/100 g Prepolymer an polymerisierbaren C-C-Doppelbindungen

C. 0 - 25, vorzugsweise 0 - 20 Gew.-%, wenigstens eines flüssigen, ohne Emulgator in Wasser nicht emulgierbaren Prepolymeren mit einem Gehalt von 0.01 - 1.3 Mol/100 g Prepolymeren an polymerisierbaren C-C-Doppelbindungen, einer Säurezahl von höchstens 25 und einer Viskosität bei 23°C von maximal 60 Pas

D. 0 - 20 Gew.-% eines organischen Lösungsmittels mit einer Verdunstungszahl < 20

E. 0 - 15 Gew.-% eines Weichmachers, vorzugsweise eines ethoxylierten Weichmachers

F. 0 - 5 Gew.-% eines üblichen Emulgator

G. 0 - 10 Gew.-% weitere üblichen Zusätze und

H. Rest Wasser,
    wobei die Summe aus A-H immer 100 Gew.-% ergeben muß und für den Fall, daß B = C ist, die Emulgatormenge > 0 sein muß.

Ein weiterer Gegenstand der Erfindung sind Verfahren zur Herstellung dieser wäßrigen Überzugsdispersionen, die dadurch gekennzeichnet sind, daß man das (die) ungesättigte(n) Prepolymere(n) und gegebenenfalls den Weichmacher gegebenenfalls in einem organischen Lösungsmittel löst, das wasserfeuchte Cellulosenitrat einarbeitet und durch Wasserzugabe eine Dispersion erhält, in welcher (Photo) Initiatoren vor dem Aushärten zugesetzt werden.

Nach einer bevorzugten Ausführungsform zur Herstellung der erfindungsgemäßen lagerstabilen, wäßrigen Überzugsmitteldispersionen des Öl-in-Wasser-Typs auf der Grundlage einer in Wasser emulgierten organischen Phase werden Cellulosenitrat, gegebenenfalls ein Weichmacher, vorzugsweise ein ethoxylierter Weichmacher, gegebenenfalls ein Emulgator und das (die) ungesättigte(n) Prepolymere(n) in einem organischen Lösungsmittel gelöst. Dabei wird so vorgegangen, daß man bei der Herstellung der organischen Phase ein Verhältnis von Feststoff zu organischen Lösungsmittel von größer als 4 : 1 einstellt, und in die organische Phase, deren Temperaturen höchstens 55°C, vorzugsweise höchstens 45°C, nicht überschreitet, Wasser in den üblichen Mengen, vorzugsweise tropfenweise, zugibt.

Bevorzugte wäßrige Dispersionen setzen sich aus den Komponenten A, B, D, E, F und H zusammen.

Besonders vergilbungsbeständige Dispersionen bestehen aus den Komponenten A, B, wobei in Wasser ohne Emulgator emulgierbare Prepolymere verwendet werden, C, D, G und H und enthalten keinen Weichmacher, insbesondere keinen ethoxylierten Weichmacher, und vorzugsweise auch keinen Emulgator.

Ein weiterer Gegenstand der Erfindung ist außerdem die Verwendung der erfindungsgemäßen wäßrigen Überzugsdispersionen gegebenenfalls nach Zugabe von Initiatoren zur Härtung und gegebenenfalls nach Verdünnung mit Wasser, aber ohne Zugabe von Koaleszenzmittel zur Herstellung von hochglänzenden Chemikalien-beständigen Überzügen.

Als Cellulosenitrate können Nitrocellulose aller Viskositätsstufen, plastifizierte Nitrocellulose oder deren Mischungen eingesetzt werden.

Ganz besonders geeignet ist Nitrocellulose, vorzugsweise der üblichen Collodiumwollequalitäten, d.h., Cellulosesalpetersäureester mit einem Stickstoffgehalt von 10,2 bis 12,4 Gew.-%.

Als flüssiges Prepolymeres mit einem Gehalt von 0,01 - 1,3 Mol/100 g Prepolymeres, vorzugsweise 0,04 - 1,0 Mol/100 g Prepolymeres, an polymerisierbaren Doppelbindungen eignen sich vorzugsweise Polyepoxid /(meth)acrylate, Polyester(meth)acrylate oder Polyurethan(meth)acrylate.

Zur Herstellung der Polyepoxid(meth)acrylate werden vorzugsweise Polyepoxidverbindungen mit mehr als eine 1,2-Epoxidgruppe pro Molekül, vorzugsweise 2-6, insbesondere 2-3 1,2-Epoxidgruppen verstanden.

Die zu verwendenden Polyepoxidverbindungen können Polyglycidylether mehrwertiger Phenole sein, beispielsweise aus Brenzkatechin, Resorcin, Hydrochinon, aus 4,4'-Dihydroxidiphenylmethan, aus 4,4'-Dihydroxy-3,3'-dimethyl-diphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken (d.h. aus Umsetzungsprodukten von ein- oder mehrwertigen Phenolen mit Aldehyden, insbesondere Formaldehyd in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. GB-PS-1 017 612), aus Polyphenolen, die durch Kondensation von Phenolen und langkettigen, mindestens 2 Halogenatome enthaltenden Halogenparaffinen erhalten wurden (vgl. GB-PS-1 024 288).

Weiter seien genannt Glycidylether mehrwertiger Alkohole, beispielsweise aus 1,4-Butandiol, 1,4-Butandiol, Glycerin, Trimethylolpropan, Pentaerythrit und Polyethylenglykolen. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyl-trimethylentrisulfon.

Außerdem kommen in Frage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

FIG00/45

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylreste mit 1-3 C-Atomen und n eine Zahl zwischen 2 bis 6 bedeuten, oder Mischungen von Glycidylcarbonsäureestern der angegebenen allgemeinen Formel (vgl. GB-PS-1 220 702).

Die Herstellung der geeigneten Epoxidverbindungen und ihre Umsetzung sind in der DOS-2 534 012 und DOS-2 631 949 offenbart.

Weiterhin können als ungesättigte Prepolymere Umsetzungsprodukte vom öl- und fettsäurefreien, gegebenenfalls ungesättigten Polyestern mit (Meth)acrylsäure verwendet werden (= Polyesteracrylate).

Als Polyester werden bevorzugt solche verwendet, die man durch Polykondensation nach bekannten Verfahren aus Alkoholen und Carbonsäuren herstellen kann, wie sie z. B. in Römpp's Chemielexikon, Bd. 1, S. 202, Frank'sche Verlagsbuchhandlung, Stuttgart, 1966 definiert oder bei D.H. Solomin, The Chemistry of Organic Filmformers, S. 75 - 101, John Wiley & Sons Inc., New York, 1967 sowie in H. Wagner und H.F. Sarx, Lackkunstharze, Carl Hanser Verlag, München 1971, S. 96 - 113, beschrieben sind.

Für die Synthese der Polyester bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimelli-

3

thsäureanhydrid, Pyromellithsäureanhydrid, Fumarsäure und Maleinsäure. Phthalsäureanhydrid ist die gebräuchlichste Säurekomponente. Die Polyester sollen nicht mehr als 20 Mol-%, bezogen auf die einkondensierten Polycarbonsäurereste, Fumar- und Maleinsäurereste enthalten.

Für die Synthese der Polyester bevorzugte Alkohole sind aliphatische, cycloaliphatische und/oder araliphatische Alkohole mit 1 - 15, vorzugsweise 2 - 6 C-Atomen, und 1 - 6, vorzugsweise 1 - 4, an nichtaromatische C-Atome gebundenen OH-Gruppen pro Molekül, z. B. Glykole wie Ethylenglykol, Propandiol-1,2 und -1,3, Butandiol-1,2, -1,3, und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxymethyl)-cyclohexan, Adipinsäure-bis-(ethylenglykolester); Etheralkohole wie Di- und Triethylenglykol, Dipropylenglykol; oxalkylierte Bisphenole mit zwei $C_2$-$C_3$-Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit; kettenabbrechende einwertige Alkohole mit 1 bis 8 Kohlenstoffatomen wie Propanol, Butanol, Cyclohexanol und Benzylalkohol. Die gebräuchlichsten Alkohole sind Glycerin, Trimethylolpropan, Neopentylglykol und Pentaerythrit.

Weiterhin sind zur Herstellung der erfindungsgemäßen Dispersionen Kondensationsprodukte aus Di- oder Polyisocyanaten mit n-freien Isocyanatgruppen mit n Molen Hydroxyalkyl-(meth)acrylaten geeignet. Diese werden durch Umsetzung aus aliphatischen und/oder aromatischen Polyisocyanaten, beispielsweise Tetramethylendiisocyanat, Hexamethylendiisocyanat, Isophorondiisocyanat, Diphenylmethandiisocyanat, Toluolendiisocyanat, Naphthylendiisocyanat, 4,4'-Diphenyletherdiisocyanat, gegebenenfalls daraus hervorgehende Di- oder Trimere sowie deren Umsetzungsprodukte mit untergeordneten Mengen wasserstoffaktiver Verbindungen, wie z. B. mehrwertigen Alkoholen, die bereits oben genannt sind, polyfunktionellen Aminen und/oder Aminoalkoholen, durch Umsetzung mit hydroxylgruppenhaltigen (Meth-)acrylsäureestern, wie Hydroxy ethyl(meth-)acrylat, Hydroxypropyl(meth-)-acrylat und/oder Butandiolmono(meth-)acrylat, hergestellt.

Als in Wasser ohne Hilfe eines Emulgators emulgierbare Prepolymere eignen sich von den genannten Prepolymeren solche, die hydrophile Gruppen, wie z. B. Polyether-, Hydroxyl-, Sulfat-, Sulfonat- oder Carboxyl-Gruppen aufweisen, vorzugsweise Polyester, wie sie in der EP-PS-000 3337 beschrieben sind.

Wenn ein Weichmacher bei der Herstellung der erfindungsgemäßen Dispersionen mitverwendet wird, so können die üblichen Weichmacher wie z. B. die Ester von aliphatischen Monocarbonsäuren, wie Cetylacetat, Glykoldiacetat, Stearate, Ricinolacetate, aromatische Monocarbonsäuren, wie z. B. der Dioctyladipat, Dimethylcyclohexylmethyladipat, Dibutylsebacat; aromatischen Dicarbonsäuren, wie z. B. Dibutylphthalat, Dioktylphtalat, Dicyclohexylphthalat, aliphatischen Tricarbonsäuren, wie z. B. Tributylcitrat, anorganischen Säuren, wie z. B. Tributylphosphat, Triphenylphosphat; sowie Sulfonamide, Öle wie Rizinusöl und Leinöl und die Alkoxylierungsprodukte der genannten Verbindungen, wie z. B. ethoxylierte Rizinusöle und Sojaöle, Stearate und Phosphorsäureester eingesetzt werden.

Ganz besonders geeignet sind die Ethoxylierungsprodukte von Weichmachern, wie z. B. ethoxylierte Rizinusöle und Sojaöle. Bei der Herstellung von Dispersionen für Überzüge auf hellen Untergrund sollten die letztgenannten Weichmacher nicht verwendet werden.

Bei der Mitverwendung von Emulgatoren können als Emulgatoren gegebenenfalls anionische Emulgatoren, beispielsweise langkettige Alkylarylsulfonate, wie Dodecylbenzol- oder Butylnaphthalinsulfonat, Sulfonobernsteinsäurederivate von ethoxylierten Alkylphenolen, Alkylsulfate, wie Lauryl- oder Stearylalkoholsulfate, Sulfobernsteinsäureester, wie Dioctyldinatriumsuccinat, oder nichtionogene Emulgatoren, wie Octyl- oder Nonylphenoloxethylate mit einem Oxethylierungsgrad von zweckmäßigerweise 4 bis 100 verwendet werden. Bevorzugt werden ethoxylierte Verbindungen eingesetzt.

Anionische oder nicht ionogene Emulgatoren, die geringe Mengen Harnstoff enthalten können, sollten, wenn ein Emulgator mitverwendet wird, bei der Herstellung von Dispersionen für vergilbungsstabile Überzüge eingesetzt werden.

Als Lösungsmittel zur Herstellung der organischen Phase kommen alle üblichen organischen Lösungsmittel in Betracht mit einer Verdunstungszahl < 20.

Vorzugsweise werden Acetate, wie Ethylactat, Isopropylacetat oder Butylacetat oder Ketone wie Aceton oder Methylisobutylketon verwendet.

Die ungesättigten Prepolymeren können unter Verwendung von herkömmlichen Vinylpolymerisationskatalysatoren oder Strahlung ausgehärtet werden. Es sind daher den erfindungsgemäßen Dispersionen herkömmliche, freie Radikale bildenden Katalysatoren vom Peroxyd- oder Azotyp zuzugeben. Es kann eine Katalysatorkonzentration von etwa 0,1 bis etwa 5 Gew.-%, bezogen auf das Gesamtgewicht des Vinylestermaterials, verwendet werden. Beispiele derartiger Verbindungen sind Wasserstoffperoxid, Benzoylperoxyd, Lauroylperoxyd, Methylethylketonperoxyd, Di-tert.-butylperoxyd, tert.-Butylperoctoat, Cumolhydroperoxyd und Azoisobuttersäuredinitril. Zur weiteren Beschleunigung der Härtung der Zusammensetzung können der Mischung des Vinylesterharzes Beschleuniger, wie Dimethyl-p-toluidin, Dimethylanilin und dergleichen, zugesetzt werden. Es sollten Polymerisationstemperaturen im Bereich von Raumtemperatur bis 150°C eingesetzt werden.

Übliche Photoinitiatoren, wie z. B. Benzophenon, Benzildimethylketal, Benzoinether, andere aromatische Ketone, Anthrachinon, Thioxanthon bzw. deren Derivate werden den erfindungsgemäßen strahlungshärtbaren wäßrigen Überzugsmitteldispersionen in Mengen von 0 bis 20, vorzugsweise 0 bis 10 Gewichtsprozent, bezogen auf (B) oder gegebenenfalls B + C, zugegeben.

Gegebenenfalls können den erfindungsgemäßen Überzugsdispersionen auch in der Lacktechnologie übliche

4

Pigmente und/oder Füllstoffe in Mengen bis 100 Gewichtsprozent, bezogen auf die Summe der Komponenten A-H zugefügt werden, wobei Rutil, Ruß, Talkum, Zinkoxid, Calciumcarbonat, verschiedene Eisenoxide oder organische Pigmente bevorzugt sind. Außerdem können auch andere in der Lacktechnologie übliche Hilfsstoffe, wie Netzmittel, Entschäumer, lösliche Farbstoffe, mitverwendet werden.

Die Überzugsmitteldispersionen werden vorzugsweise hergestellt, indem man die Cellulosesubstanz, gegebenenfalls den Weichmachern und gegebenenfalls einen oder mehrere Emulgatoren und das ungesättigte Harz, gegebenenfalls unter Verwendung eines organischen Lösungsmittel oder Lösungsmittelgemisches, ineinander löst bzw. anlöst und in das erhaltene zähflüssige cellulosehaltige Gemisch (Paste) unter Einhaltung von Temperaturen von höchstens 55°C, vorzugsweise höchstens 45°C, und dann Wasser, vorzugsweise tropfenweise, hinzugibt.

Je nach Anwendungsgebiet (z. B. Holz-, Metall-, Kunststoff-, Papier-, Leder-, Glas- und Folienlackierungen) können noch weitere bekannte organische Lösungsmittel mit etwa VZ < 20 der Dispersion zugesetzt werden, wobei die Lösungsmittelkonzentration 25 % bezogen auf die Endlackformulierung, nicht überschritten werden soll.

Die gemäß der Erfindung hergestellten wäßrigen Überzugsmittelemulsionen weisen einen sehr guten Verlauf und eine gute Lagerbeständigkeit auf. Sie können zu Überzügen mit hohem Glanz und Vergilbungsbeständigkeit und mit ausgezeichneter Chemikalienbeständigkeit verarbeitet werden.

**Beispiel 1**

In einer Lösung von

| | |
|---|---|
| 5 g | ethoxyliertem Rizinusöl mit einem Ethoxylierungsgrad von 80 |
| 37 g | eines Polyesteracrylats mit einer SZ 20 und einer Viskosität von 25 Pa.s bei 23°C (Ebecryl 850®) |
| 7 g | n-Butylacetat |

wurden

| | |
|---|---|
| 28 g | Cellulosenitrat, Norm 33 E (in Form von 18 g trockenem Cellulosenitrat und 10 g Wasser), |

eingearbeitet und aufgelöst zu einer pastösen Dispersion. Bei langsam laufendem Rührwerk wurden tropfenweise

| | |
|---|---|
| 23 g | Wasser |

eingearbeitet.

Es entstand eine 60 %-ige lagerstabile Dispersion mit einem Lösungsmittelanteil von 7 %. (Feststoff : Lösungsmittel = 8,57 : 1)

Die erhaltene Cellulosenitrat-Dispersion wurde nach Zusatz von 1,5 Gew.-% (bezogen auf die Cellulosenitrat-Dispersion) des Fotoinitiators Darocur® 1173 (Fa. Merck, Darmstadt) mit Wasser auf ca. 35 Gew.-% verdünnt und ca. 40 - 50 g/m$^2$ auf eine Fichtenholzplatte mittels einer Spritzpistole aufgetragen. Der Naßfilm zeichnete sich durch ein sehr geringes Absacken und einen exzellenten Verlauf aus. Diese Fläche wurde anschließend 40 sec. bei einer Temperatur von 60°C in einem Düsentrockner (Luftgeschwindigkeit: 10 m/sec) getrocknet und unter UV-Strahlung bie 80 W/cm (1 Strahler) und einer Bandgeschwindigkeit von 10 m/min gehärtet. Nach einem Schleifvorgang wurde dieser Lackiervorgang wiederholt. Es resultierte eine trockene, hochglänzende Lackschicht, die sich durch eine äußerst hohe Oberflächenqualität und eine hohen Chemikalienfestigkeit (z. B. 10 sec mit Aceton belastet) auszeichnet.

**Beispiel 2**

In einer Lösung von

| | |
|---|---|
| 2,5 g | Dibutylphthalat |
| 3,5 g | ethoxyliertem Rizinusöl mit einem Ethoxylierungsgrad von 80 |
| 30,0 g | eines Polyesteracrylats (Roskydal 850 W®) mit einer SZ < 18 und einer Viskosität von 15 Pa.s bei 20°C |
| 8,0 g | n-Butylacetat |

wurden

| | |
|---|---|
| 22,0 g | Cellulosenitrat, Norm 27 E (in Form von 15 g trockenem Cellulosenitrat und 7 g Wasser) |

EP 0 154 241 B1

eingearbeitet und aufgelöst. Bei laufendem Rührwerk wurden tropfenweise

34,0 g Wasser

eingearbeitet.

Es entstand eine 51 %-ige lagerstabile Dispersion mit einem Lösungsmittelgehalt von 8 %.
(Feststoff: Lösungsmittel = 6,4 : 1)
Von dieser Dispersion wurde folgender Lack hergestellt:

| Cellulosenitrat-Dispersion | 70 g |
| Paraffinemulsion, 10 %-ig in Wasser (Fp 57 - 60°C) | 10 g |
| Kobaltacetat (1 %-ig in Wasser) | |
| | 10 g |
| $H_2O_2$ 30 %-ig | 3 g |
| Wasser | 7 g |

Dieser Lack wurde mit einer Schicht von 90 μ auf einer Glasplatte aufgezogen und mittels Infrarottrocknung gehärtet. Es entstand eine harte Lackschicht.

**Beiseiel 3**

In eine Lösung von

| 4 g | ethoxyliertem Rizinusöl mit einem Ethoxylierungsgrad von 80 |
| 2 g | Dibutylphthalat |
| 16,4 g | des Polyesteracrylat gemäß Beispiel 2 |
| 16,4 g | des Polyesteracrylats mit einer SZ < 5 und einer Viskosität von 50 Pa.s bei 23°C (Laromer PE 55 F®) |
| 5 g | n-Butylacetat |

wurden

| 12,6 g | Cellulosenitrat, Norm 24 E (in Form von 8,2 g Trocken-Cellulosenitrat und 4,4 g Wasser), eingearbeitet und aufgelöst. Bei langsam laufendem Rührwerk wurden tropfenweise |
| 43,6 g | Wasser |

eingearbeitet.
Es entstand eine 47 %-ige lagerstabile Dispersion mit einem Lösungsmittelanteil von 5 Gew.-%.
(Feststoff: Lösungsmittel = 9,4 : 1)
Diese Cellulosenitrat-Dispersion wurde mit 15 Gew.-% einer Pigmentpräparation (Novofil®, BASF) und 2 Gew.-% (bez. auf Cellulosenitrat-Dispersion) eines Fotoinitiators (z. B. Darocur® 1173/Fa. Merck) versetzt. Dieser pigmentierte Lack wurde mittels eines Rakels (12 μ) auf eine Aluminiumfolie aufgetragen, bis zur Wasserfreiheit getrocknet und anschließend unter UV-Strahlung gehärtet. Es wurde ein Farbfilm mit hohem Glanz, guter Haftfestigkeit und ausgezeichneter Chemikalienbeständigkeit (z. B. gegenüber Ethylacetat) erreicht.

**Beispiel 4**

In einer Lösung von

| 5,0 g | ethoxyliertem Rizinusöl mit einem Ethoxylierungsgrad von 100 |
| 3,9 g | Dibutylphthalat |
| 34,3 g | |
| | eines Polyesteracrylat (Ebecryl 810®) mit einer SZ < 20 und einer Viskosität von 0,5 Pa.s bei 23°C |

wurden

| 25,4 g | Cellulosenitrat Norm 33 E (in Form von 17,2 g trockenem Cellulosenitrat und 9,2 g Wasser eingearbeitet und aufgelöst. Es entsteht eine pastöse Dispersions die bei langsam laufendem Rührwerk mit |
| 30,4 g | Wasser tropfenweise verdünnt wurde. |

Es entstand eine 60,4 %-ige lagerstabile Dispersion, die völlig lösungsmittelfrei ist.

6

Diese Dispersion wurde mit 2 g (2 Gew.-% bez. auf Cellulosenitrat-Dispersion) eines Fotoinitiators (Darocur®R 1173, Fa. Merck) versetzt und mit einer Schichtdicke von 90 μ auf eine Glasplatte aufgezogen und bei 20°C wasserfrei getrocknet. Anschließend wurde dieser Lackfilm unter UV-Strahlung gehärtet.

Es entstand eine harte, glänzende, transparente Lackschicht.

## Beispiel 5

In eine Lösung von

| | |
|---|---|
| 0,03 Gew.-T. | Dodecylbenzolsulfonat |
| 31,50 Gew.-T. | eines Polyether-Gruppen enthaltenden Polyesteracrylat (Roskydal 850 W®, Bayer AG) |
| 15,00 Gew.-T. | eines Polyesteracrylat (OTA 480®, UCB) mit einer Säurezahl $\leqslant$ 1 und einer Viskosität von 0,07 Pa.S (bei 23°C) wurden |
| 23,00 Gew.-T. | Cellulosenitrat, Norm 33 E (in Form von 15 g trockenem Cellulosenitrat und 7 g Wasser) eingearbeitet und zu einer pastösen Dispersion verrührt. Bei langsam laufendem Rührwerk wurden tropfenweise |
| 30,47 Gew.-T. | Wasser mit 0,10 Gew.-T. Verdicker (Deuteron XG®, W.O.C. Schöner GmbH) eingearbeitet. |

Es entstand eine 60 Gew.-%-ige lagerstabile Dispersion.

Zu dieser Dispersion wurden 2 Gew.-% Fotoinitiator (Darocur® 1173, Merck) eingerührt und mittels eines Rakels (120 μm) auf eine weiße Resopalplatte aufgezogen.

Dieser Film wurde bis zur Wasserfreiheit bei Raumtemperatur gelagert. Anschließend unter UV-Strahlung (80 W/cm, 1 Strahler, Bandgeschwindigkeit, 5 m/sec) gehärtet.

Die Vergilbung wurde nach 24 h beurteilt (s. Tabelle 1).

## Beispiel 6

In

| | |
|---|---|
| 48,00 Gew.-T. | eines Polyethergruppen enthaltenden Polyesteracrylat (Roskydal 850 W®, Bayer AG) wurden |
| 18,00 Gew.-T. | Cellulosenitrat, Norm 32 E (in Form von 12 Gew.-T. Cellulosenitrat und 6 Gew.-T. Wasser) eingearbeitet und zu einer pastösen Dispersion verrührt. Bei langsam laufendem Rührwerk wurden |
| 34,00 Gew.-T. | Wasser zugesetzt. |

Es entstand eine 60 Gew.-%-ige lagerstabile Dispersion.

Zu dieser Dispersion wurde 2 Gew.-% Fotoinitiator (Darodur® 1173, Merck) eingerührt und mittels eines Rakels (120 μm) auf eine weiße Resopalplatte aufgezogen.

Die Härtung erfolgte wie in Beispiel 5.

Die Vergilbung wurde nach 24 h beurteilt (s. Tab. Nr. 1).

## Beispiel 7

Zu 60 g der in Beispiel 6 erhaltenen 60 Gew.-%-igen Dispersion wurden

| | |
|---|---|
| 10 g | einer 10 Gew.-%-igen wäßrigen Paraffinemulsion (Sp 57 - 60°C) |
| 10 g | einer 1 Gew.-%-igen wäßrigen Kobaltacetatlösung |
| 3 g | einer 30 Gew.-%-igen $H_2O_2$-Lösung und |
| 17 g | Wasser eingerührt. |

Dieser Lack wurde mit einer Schichtdicke von 90 μm auf eine Resopalplatte aufgezogen und mittels Infrarottrocknung gehärtet. Es entstand eine harte vergilbungsbeständige Lackschicht.

**Tabelle Nr. 1**

|  | Beispiel 1 | Beispiel 2 | Beispiel 3 |
|---|---|---|---|
| Glanz | gut | gut | gut |
| Härte | gut | gut | gut |
| Vergilbung | keine sichtbare Vergilbung | | |

**Patentansprüche**

1. Wäßrige, zur Herstellung transparenter Überzüge geeignete Überzugsmitteldispersionen aus

A.  3 - 30 Gew.-% Cellulosenitrat,

B.  10 - 50 Gew.-% wenigstens eines flüssigen, gegebenenfalls in Wasser auch ohne Emulgator emulgierbaren Prepolymeren mit einem Gehalt von 0,01 - 1,3 Mol/100 g Prepolymer an polymerisierbaren C-C-Doppelbindungen,

C.  0 - 25 Gew.-% wenigstens eines flüssigen ohne Emulgator in Wasser nicht emulgierbaren Prepolymeren mit einem Gehalt von 0,01 - 1,3 Mol/100 g Prepolymeren an polymerisierbaren C-C Doppelbindungen und einer Säurezahl von höchstens 25 und einer Viskosität bei 23°C von maximal 60 Pa.s,

D.  0 - 20 Gew.-% eines organischen Lösungsmittels mit einer Verdunztungszahl < 20,

E.  0 - 15 Gew.-% eines Weichmachers

F.  0 - 5 Gew.-% eines üblichen Emulgators

G.  0 - 10 Gew.-% weitere üblichen Zusätze und

H.  Rest Wasser,

wobei die Summe aus A-H immer 100 Gew.-% ergeben muß und wenn B gleich C ist die Emulgatormenge > 0 sein muß.

2. Weichmacher, gegebenenfalls auch emulgatorfreie wäßrige Dispersionen nach Anspruch 1, dadurch gekennzeichnet, daß als Komponente B ein in Wasser ohne Emulgator emulgierbares Prepolymeres verwendet wird.

3. Dispersionen nach Anspruch 1 aus den Komponenten A, B, D, E, F und H.

4. Vergilbungsbeständige Dispersionen nach Anspruch 1 oder 2 aus den Komponenten A, B, C, D, G und H.

5. Dispersionen nach Ansprüchen 1 bis 4, dadurch gekennzeichnet, daß die flüssigen Prepolymeren einen Gehalt von 0,04 - 1,0 Mol/100 g Prepolymeren an polymerisierbaren Doppelbindungen aufweisen.

6. Dispersionen nach Ansprüchen 1 bis 5, dadurch gekennzeichnet, daß als Prepolymere der Komponente C Polyepoxid/(meth)acrylate, Polyester(meth)acrylate oder Polyurethan(meth)acrylate und als Prepolymere der Komponente B, die in Wasser ohne Emulgator emulgierbar sind, die genannten Prepolymeren mit hydrophilen Gruppen vorzugsweise Polyether-, Hydroxyl-, Sulfat-, Sulfonat-, oder Carboxyl-Gruppen verwendet werden.

7. Dispersionen nach Anspruch 1, dadurch gekennzeichnet, daß als Emulgatoren gegebenenfalls anionische Emulgatoren, wie langkettige Alkylarylsulfonate, Sulfono-bernsteinsäurederivate von ethoxylierten Alkylphenolen, Alkylsulfonate, Sulfobernsteinsäureester oder nichtionogene Emulgatoren, wie Octyl- oder Nonylphenoloxethylate mit einem Oxethylierungsgrad von zweckmäßigerweise 4 bis 100, bevorzugt ethoxylierte Verbindungen, verwendet werden.

8. Dispersionen nach Anspruch 4, dadurch gekennzeichnet, daß als Emulgatoren anionische oder nicht ionogene Emulgatoren, die geringe Mengen Harnstoff enthalten können, verwendet werden.

9. Verfahren zur Herstellung von Überzugsmitteldispersionen nach Ansprüchen 1 bis 8, dadurch gekennzeichnet, daß man das Cellulosenitrat gegebenenfalls den Weichmachern und gegebenenfalls einen oder mehrere Emulgatoren und das ungesättigte Harz, gegebenenfalls unter Verwendung eines organischen Lösungsmittels oder Lösungsmittelgemisches, ineinander löst bzw. anlöst und in das erhaltene zähflüssige cellulosehaltige Gemisch (Paste) unter Einhaltung von Temperaturen von höchstens 55°C, vorzugsweise höchstens 45°C, Wasser, vorzugsweise tropfenweise, hinzugibt.

10. Verfahren zur Herstellung hochglänzender transparenter Überzüge, dadurch gekennzeichnet, daß eine Dispersion gemäß Anspruch 1 mit geeigneten Initiatoren zur Aushärtung versetzt wird und dann aufgetragen, getrocknet und anschließend gehärtet wird.

**Claims**

1. Aqueous coating dispersions, suitable for the formation of transparent coatings, of

A.  3 to 30 % by weight cellulose nitrate,

B.  10 to 50 % by weight of at least one liquid prepolymer, optionally emulsifiable in water even without an emulsifier, containing from 0.01 to 1.3 mol/100 g prepolymer of polymerizable C-C-double bonds,

C. 0 to 25 % by weight of at least one liquid prepolymer, emulsifiable in water without an emulsifier, containing 0.01 to 1.3 mol/100 g prepolymer of polymerizable C-C-double bonds and having an acid value of at most 25 and a viscosity at 23°C of at most 60 Pa.s,

D. 0 to 20 % by weight of an organic solvent having an evaporation index of < 20,

E. 0 to 15 % by weight of a plasticizer,

F. 0 to 5 % by weight of a typical emulsifier,

G. 0 to 10 % by weight of other typical additives and

H. remainder water,

the sum of A-H always having to be 100 % by weight and, where B = C, the quantity of emulsifier having to be > 0.

2. A plasticizer and, optionally, emulsifier-free aqueous dispersion as claimed in claim 1, characterized in that a prepolymer emulsifiable in water without an emulsifier is used as component B.

3. Dispersions as claimed in claim 1 of components A, B, D, E, F and H.

4. Non-yellowing dispersions as claimed in claim 1 or 2 of components A, B, C, D, G and H.

5. Dispersions as claimed in claims 1 to 4, characterized in that the liquid prepolymer contains 0.04 to 1.0 mol/100 g prepolymer of polymerizable double bonds.

6. Dispersions as claimed in claim 1 to 5, characterized in that polyepoxide (meth)acrylates, polyester (meth)acrylates or polyurethane (meth)acrylates are used as the prepolymer of component C and the prepolymers mentioned containing hydrophilic groups, preferably polyether, hydroxyl, sulfate, sulfonate or carboxyl groups, are used as the prepolymer of component B emulsifiable in water without an emulsifier.

7. Dispersions as claimed in claim 1, characterized in that anionic emulsifiers, such as long-chain alkylaryl sulfonates, sulfonosuccinic acid derivatives of ethoxylated alkylphenols, alkylsulfonates, sulfosuccinic acid esters, or nonionic emulsifiers, such as octyl or nonylphenol ethoxylates having a degree of ethoxylation of, best, 4 to 100, preferably ethoxylated compounds, are optionally used as emulsifiers.

8. Dispersions as claimed in claim 4, characterized in that anionic or nonionic emulsifiers which may contain small quantities of urea are used as emulsifiers.

9. A process for the production of the coating dispersions claimed in claims 1 to 8, characterized in that the cellulose nitrate, optionally the plasticizers and optionally one or more emulsifiers and the unsaturated resin are dissolved in one another or to a certain extent, optionally using an organic solvent or solvent mixture, and water is added, preferably dropwise, to the resulting viscous, cellulose-containing mixture (paste) at a temperature of at most 55°C and preferably at a temperature of at most 45°C.

10. A process for the production of high-gloss transparent coatings, characterized in that suitable initiators are added to the dispersion claimed in claim 1 for hardening, after which the dispersion is applied, dried and then hardened.

## Revendications

1. Dispersions aqueuses d'agents de revêtement appropriées à la formation de revêtements transparents, constituées de:

A. 3 à 30 % en poids de nitrate de cellulose,

B. 10 à 50 % en poids d'au moins un prépolymère liquide éventuellement émulsionnable dans l'eau même en l'absence d'émulsionnant, avec une teneur en doubles liaisons carbone-à-carbone polymérisables de 0,01 à 1,3 mole pour 100 g de prépolymère,

C. 0 à 25 % en poids d'au moins un prépolymère liquide non émulsionnable dans l'eau en l'absence d'émulsionnant, avec une teneur en doubles liaisons carbone-à-carbone polymérisables de 0,01 à 1,3 mole pour 100 g de prépolymère et d'indice d'acide au maximum égal à 25, et de viscosité à 23°C au maximum égale à 60 Pa.s.

D. 0 à 20 % en poids d'un solvant organique de degré d'évaporation inférieur à 20,

E. 0 à 15 % en poids d'un plastifiant,

F. 0 à 5 % en poids d'un émulsionnant classique,

G. 0 à 10 % en poids d'autres additifs classiques et,

H. le reste étant de l'eau,

la somme de A à H devant toujours être égale à 100 % en poids et, lorsque B est égal à C, la quantité d'émulsionnant doit être supérieure à 0.

2. Dispersions aqueuses dépourvues de plastifiant, et le cas échéant dépourvues aussi d'émulsionnant suivant la revendication 1, caractérisées en ce qu'on utilise comme composant B un prépolymère émulsionnable dans l'eau sans émulsionnant.

3. Dispersions suivant la revendication 1, constituées des composants A, B, D, E, F et H.

4. Dispersions résistant au jaunissement suivant la revendication 1 ou 2, constituées des composants A, B, C, D, G et H.

5. Dispersions suivant les revendications 1 a 4, caractérisées en ce que les prépolymères liquides présentent une teneur en doubles liaisons polymérisables de 0,04 à 1,0 mole pour 100 g de prépolymère.

6. Dispersions suivant les revendications 1 à 5, caractérisées en ce qu'on utilise comme prépolymères du composant C des polyépoxyde/(méth)acrylates, des polyester(méth)acrylates ou des polyuréthanne(méth)acrylates et comme prépolymères du composant B, qui sont émulsionnables dans l'eau sans émulsionnant, les prépolymères mentionnés porteurs de groupes hydrophiles, de préférence des groupes polyéther, hydroxyle, sulfate, sulfonate ou carboxyle.

7. Dispersions suivant la revendication 1, caractérisées en ce qu'on utilise comme émulsionnants le cas échéant des émulsionnants anioniques tels que des alkylarylsulfonates à longues chaînes alkyliques, des dérivés d'acide sulfonosucciniques d'alkylphénols éthoxylés, des alkylsulfonates, des esters d'acide sulfosuccinique, ou des émulsionnants non ionogènes tels que des oxéthylates d'octyl- ou de nonylphénol ayant de préférence un degré d'oxéthylation de 4 à 100, notamment des composés éthoxylés.

8. Dispersions suivant la revendication 4, caractérisées en ce qu'on utilise comme émulsionnants des émulsionnants anioniques ou non ionogènes qui peuvent contenir de faibles quantités d'urée.

9. Procédé de préparation de dispersions d'agents de revêtement suivant les revendications 1 à 8, caractérisé en ce qu'on dissout mutuellement ou commence à dissoudre le nitrate de cellulose, éventuellement le plastifiant et le cas échéant un ou plusieurs émulsionnants et la résine non saturée, en utilisant le cas échéant un solvant organique ou un mélange de solvants, et on ajoute de l'eau de préférence goutte à goutte au mélange (pâte) visqueux obtenu, contenant de la cellulose, en maintenant des températures au maximum égales à 55°C et de préférence au maximum égales à 45°C.

10. Procédé de production de revêtements transparents très brillants, caractérisé en ce qu'une dispersion suivant la revendication 1 est additionnée d'initiateurs appropriés, en vue de son durcissement, après quoi elle est appliquée, séchée puis durcie.